# EUROPEAN PATENT APPLICATION

(11) **EP 4 807 416 A1**
(43) Date of publication of application: **16.09.2026**
(21) Application number: 24888383.7
(22) Date of filing: 10.09.2024
(51) Int. Cl.: G02B 6/36, G02B 6/25, G02B 6/245

(54) **OPTICAL FIBER PROCESSING TOOL**

(30) Priority: 10.11.2023 JP 2023192423
(71) Applicant: Fujikura Ltd., Tokyo 135-8512 (JP)
(72) Inventor: KATO, Rei, Sakura-shi, Chiba 285-8550 (JP); MATSUDA, Takaharu, Sakura-shi, Chiba 285-8550 (JP)
(74) Representative: Plasseraud IP
(86) International application number: PCT/JP2024/032346
(87) International publication number: WO 2025/100083

(57) **Abstract**

An optical fiber processing tool includes a fiber holder that holds an optical fiber in a state where an end portion of the optical fiber extends to one side, a fiber cutting portion that cuts the optical fiber, a connector holder that holds an optical connector, and a guide rail that guides movement of the fiber holder, in which the fiber cutting portion and the connector holder are disposed at an interval in an orthogonal direction orthogonal to an extending direction of the optical fiber, and the fiber holder is linearly movable in the orthogonal direction between an optical fiber cutting position where the fiber cutting portion cuts the optical fiber and a connection position where the optical connecter is connected to the optical fiber while being guided by the guide rail.

## Description

### TECHNICAL FIELD

The present invention relates to an optical fiber processing tool.

Priority is claimed on Japanese Patent Application No. 2023-192423, filed November 10, 2023, the content of which is incorporated herein by reference.

### BACKGROUND ART

Patent Document 1 discloses a field-assembly optical connector. The field-assembly optical connector is assembled to an optical fiber at a location where the optical fiber is installed. Such an optical connector is assembled to an end portion of an optical fiber taken out from an optical fiber cable or the like. In the related art, a plurality of tools have been used to process an optical fiber and assemble an optical connector. For example, a coating removal tool for removing a coating of the optical fiber, a cutting tool for cutting the optical fiber, a fixing tool for fixing the optical fiber to the optical connector, and the like are used.

### Citation List

### Patent Document

Patent Document 1: Japanese Unexamined Patent Application, First Publication No. 2020-143921

### SUMMARY OF INVENTION

### Technical Problem

When performing processes on an optical fiber for assembling an optical connector, switching between a plurality of tools leads to a decrease in work efficiency.

The present invention has been made in consideration of such circumstances, and an object of the present invention is to provide an optical fiber processing tool capable of improving work efficiency when processing an optical fiber.

### Solution to Problem

According to Aspect 1 of the present invention, there is provided an optical fiber processing tool including a fiber holder configured to hold an optical fiber in a state where an end portion of the optical fiber extends to one side, a fiber cutting portion configured to cut the optical fiber, a connector holder configured to hold an optical connector, and a guide rail configured to guide movement of the fiber holder, in which the fiber cutting portion and the connector holder are disposed at an interval in an orthogonal direction orthogonal to an extending direction of the optical fiber, and the fiber holder is linearly movable in the orthogonal direction between an optical fiber cutting position where the fiber cutting portion cuts the optical fiber and a connection position where the optical connecter is connected to the optical fiber while being guided by the guide rail.

According to Aspect 2 of the present invention, the optical fiber processing tool according to Aspect 1 further includes a coating stripper configured to remove a coating of the optical fiber, in which when the fiber holder is at the optical fiber cutting position, the coating stripper faces the fiber holder in the extending direction.

According to Aspect 3 of the present invention, the optical fiber processing tool according to Aspect 2 further includes a guide shaft extending in the extending direction, in which the coating stripper is slidable in the extending direction together with the guide shaft, the fiber holder has a first guide hole and a second guide hole that extend in the extending direction, the first guide hole and the second guide hole are disposed at an interval in the orthogonal direction, when the fiber holder is at the optical fiber cutting position, a position of the guide shaft and a position of the first guide hole in the orthogonal direction coincide with each other, and when the fiber holder is at the connection position, the position of the guide shaft and a position of the second guide hole in the orthogonal direction coincide with each other.

According to Aspect 4 of the present invention, in the optical fiber processing tool according to Aspect 2 or 3, the coating stripper includes a first stripper blade and a second stripper blade, the first stripper blade is supported by a first link member, the second stripper blade is supported by a second link member, the first link member is swingable about a first link rotation shaft, the second link member is swingable about a second link rotation shaft, and the first link rotation shaft and the second link rotation shaft are disposed at positions farther from the fiber holder in the extending direction than the first stripper blade and the second stripper blade.

### Advantageous Effects of Invention

According to the above-described aspect of the present invention, it is possible to provide an optical fiber processing tool capable of improving work efficiency when processing an optical fiber.

### BRIEF DESCRIPTION OF DRAWINGS

[FIG. 1] A plan view of an optical fiber processing tool of an embodiment.
[FIG. 2] A perspective view of a base member of the embodiment.
[FIG. 3A] A perspective view of a fiber holder of the embodiment.
[FIG. 3B] A view of the fiber holder of the embodiment as seen from an extending direction.
[FIG. 4] A plan view of a coating stripper, a handle portion, and a link mechanism of the embodiment.
[FIG. 5] A perspective view of the coating stripper of the embodiment.
[FIG. 6] A perspective view of a stripper support base of the embodiment.
[FIG. 7] A bottom view of the base member and the stripper support base of the embodiment.
[FIG. 8] A perspective view of a fiber cutting portion of the embodiment.
[FIG. 9A] A view showing an actuation of a cutting clamp of the embodiment.
[FIG. 9B] A view showing an actuation of the cutting clamp of the embodiment.
[FIG. 9C] A view showing an actuation of the cutting clamp of the embodiment.
[FIG. 10] A cross-sectional view of a connector holder of the embodiment.
[FIG. 11] A perspective view of a wedge of the embodiment.
[FIG. 12] A perspective view of the wedge and a wedge link of the embodiment.
[FIG. 13A] A view showing a work procedure and a function of each unit when processing an optical fiber using the optical fiber processing tool of the embodiment.
[FIG. 13B] A view showing a work procedure and a function of each unit when processing the optical fiber using the optical fiber processing tool of the embodiment.
[FIG. 13C] A view showing a work procedure and a function of each unit when processing the optical fiber using the optical fiber processing tool of the embodiment.
[FIG. 14] A view showing a work procedure and a function of each unit when processing the optical fiber using the optical fiber processing tool of the embodiment.
[FIG. 15] A view showing a work procedure and a function of each unit when processing the optical fiber using the optical fiber processing tool of the embodiment.
[FIG. 16] A view showing a work procedure and a function of each unit when processing the optical fiber using the optical fiber processing tool of the embodiment.
[FIG. 17] A view showing a work procedure and a function of each unit when processing the optical fiber using the optical fiber processing tool of the embodiment.
[FIG. 18] A view showing a work procedure and a function of each unit when processing the optical fiber using the optical fiber processing tool of the embodiment.
[FIG. 19] A view showing a work procedure and a function of each unit when processing the optical fiber using the optical fiber processing tool of the embodiment.
[FIG. 20A] A view showing a work procedure and a function of each unit when processing the optical fiber using the optical fiber processing tool of the embodiment.
[FIG. 20B] A view showing a work procedure and a function of each unit when processing the optical fiber using the optical fiber processing tool of the embodiment.
[FIG. 20C] A view showing a work procedure and a function of each unit when processing the optical fiber using the optical fiber processing tool of the embodiment.
[FIG. 21] A cross-sectional view of a connector holder of a modification example of the embodiment.

### DESCRIPTION OF EMBODIMENTS

Hereinafter, an optical fiber processing tool of an embodiment will be described with reference to the drawings.

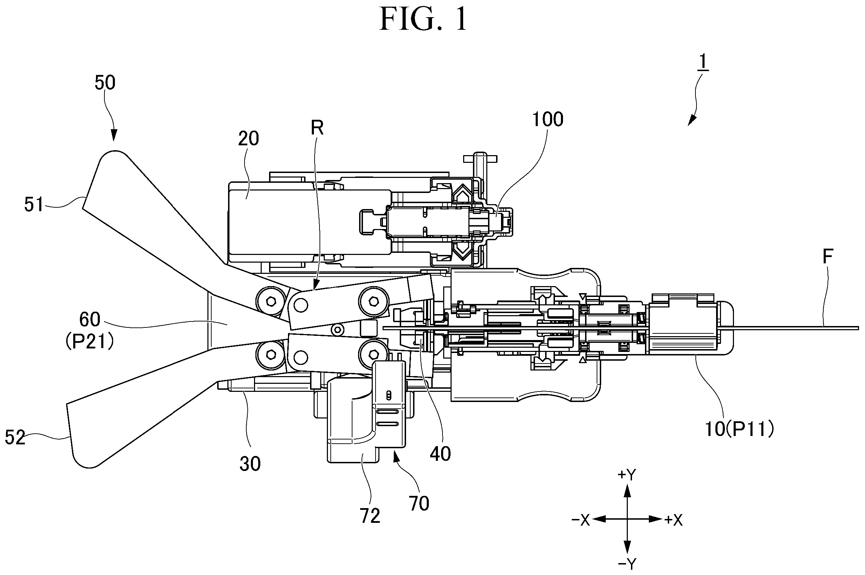

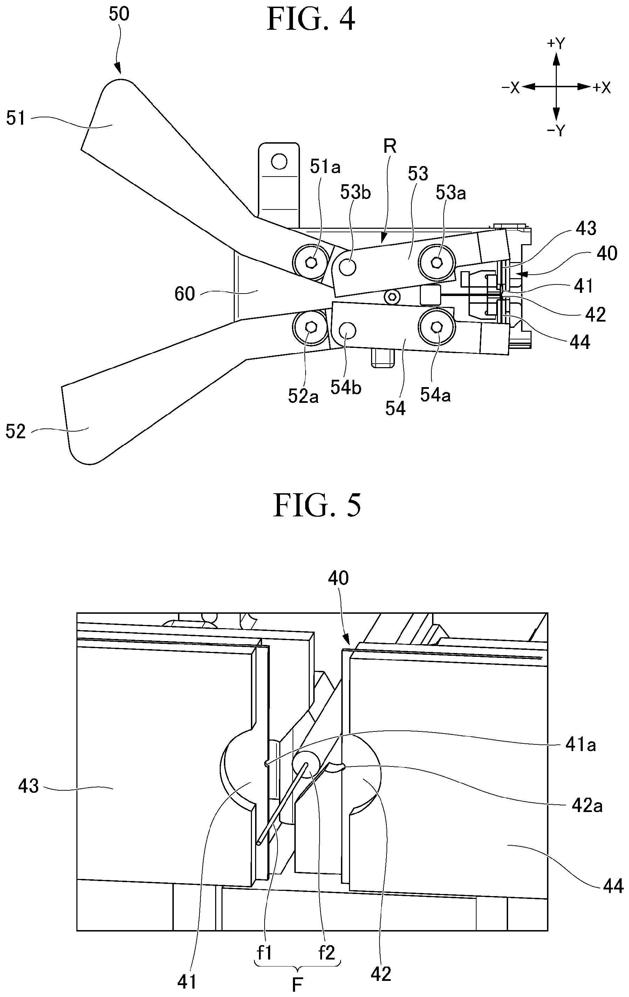

As shown in FIG. 1, an optical fiber processing tool 1 includes a fiber holder 10, a connector holder 20, a base member 30, a coating stripper 40, a handle portion 50, a stripper support base 60, a fiber cutting portion 70, and a link mechanism R. The fiber holder 10 can hold an optical fiber F (see FIG. 5). The connector holder 20 can hold an optical connector 100.

The optical fiber F has a bare portion f1 and a coating f2 that covers the bare portion f1 (see FIG. 5). The bare portion f1 is formed of, for example, glass. The bare portion f1 includes a core and a cladding that covers the core. The coating f2 is formed of, for example, a resin.

The optical fiber processing tool 1 has a coating removal function, a cutting function, and an assembly function. The coating removal function is a function of partially removing the coating f2 of the optical fiber F from the optical fiber F to expose the bare portion f1. The cutting function is a function of cutting the optical fiber F. The assembly function is a function of assembling the optical fiber F to the optical connector 100. Note that the optical fiber processing tool 1 need not have any one of the coating removal function, the cutting function, and the assembly function.

### <Definitions of directions>

The optical fiber F is held by the fiber holder 10 such that an end portion of the optical fiber F extends from the fiber holder 10 by a predetermined length. The term "predetermined length" will be described below. In the present specification, a direction in which the end portion of the optical fiber F extends from the fiber holder 10 is referred to as an extending direction X. The extending direction X coincides with a longitudinal direction of the optical fiber F. One direction orthogonal to the extending direction X is referred to as an orthogonal direction Y. A direction orthogonal to both the extending direction X and the orthogonal direction Y is referred to as a vertical direction Z.

In the extending direction X, a side (-X side in the drawing) from the fiber holder 10 toward the fiber cutting portion 70 is referred to as a left side. A side (+X side) opposite to the left side is referred to as a right side. The coating stripper 40 and the connector holder 20 are disposed side by side in the orthogonal direction Y. In the orthogonal direction Y, a side (+Y side in the drawing) from the coating stripper 40 toward the connector holder 20 is referred to as a back side. A side (-Y side) opposite to the back side is referred to as a front side. In the vertical direction Z, a side (+Z side in the drawing) on which the optical fiber F moves when the optical fiber F is taken out from the fiber holder 10 is referred to as an upper side. A side (-Z side) opposite to the upper side is referred to as a lower side. The vertical direction Z need not coincide with a gravitational vertical direction. In addition, the terms "upper side" and "lower side" need not coincide with the upper side and the lower side in the gravitational vertical direction.

### <Overall configuration>

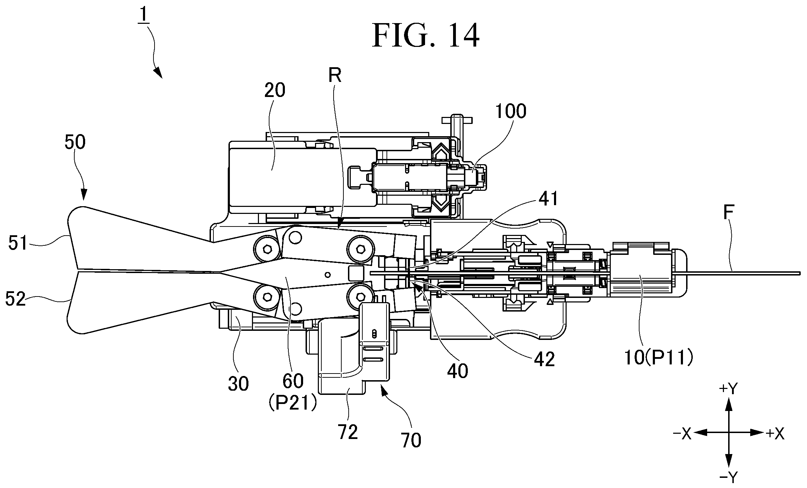

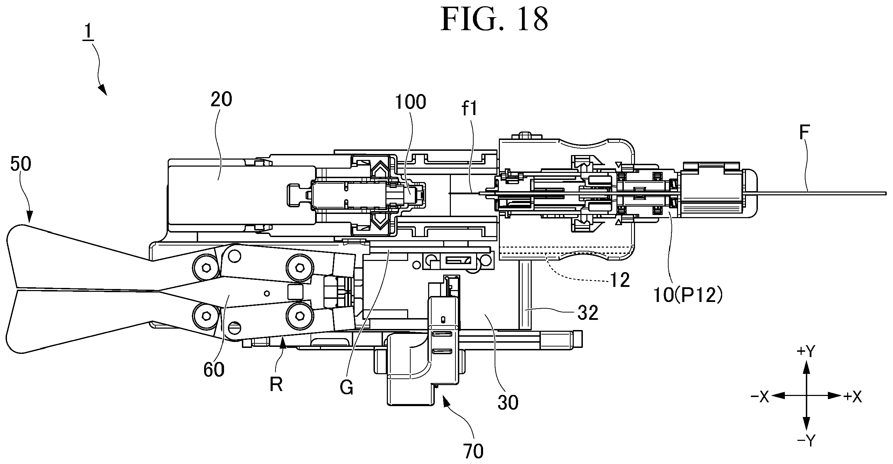

As shown in FIG. 1 and the like, the fiber holder 10 holds the optical fiber F in a state where the end portion of the optical fiber F is extended. The fiber holder 10 is attached to the base member 30 so as to be movable in the orthogonal direction Y. The fiber holder 10 is movable between a position (FIGS. 1, 14, and the like) corresponding to the coating stripper 40 and a position (FIG. 18 and the like) corresponding to the connector holder 20 in the orthogonal direction Y.

The connector holder 20 is disposed on the back side (+Y side) with respect to the coating stripper 40. That is, the connector holder 20 and the coating stripper 40 are disposed at different positions in the orthogonal direction Y, which is a direction in which the fiber holder 10 moves. The connector holder 20 holds the optical connector 100. When using the optical fiber processing tool 1, a user causes the connector holder 20 to hold the optical connector 100, which serves as an object to be connected to the optical fiber F.

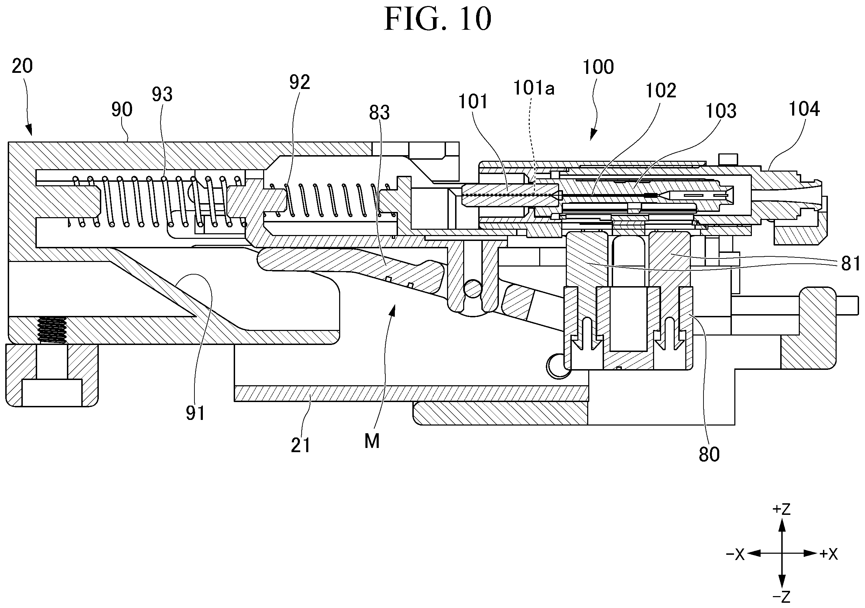

As shown in FIG. 10, the optical connector 100 has a ferrule 101, a built-in fiber 102, a mechanical splice 103, and a housing 104. The ferrule 101 has a fiber hole 101a. The built-in fiber 102 is inserted through the fiber hole 101a. The built-in fiber 102 is exposed on an end surface (connection end surface) on the -X side of the ferrule 101. In addition, the built-in fiber 102 extends from the ferrule 101 to the +X side. A portion of the built-in fiber 102 is located inside the mechanical splice 103.

Although the details will be described below, the optical fiber F, which is an object to be connected to the built-in fiber 102, is inserted into the mechanical splice 103 from the +X side. The mechanical splice 103 has a clamping portion that is elastically displaceable or deformable. The clamping portion has a function of clamping and fixing the built-in fiber 102 and the optical fiber F and maintaining an optical connection therebetween. In addition, the fixing can be released by opening the clamping portion. An elastic force is applied to the clamping portion by an elastic member such as a leaf spring. When a wedge body 81 of a wedge 80, which will be described below, is inserted into the mechanical splice 103, the clamping portion is opened against the elastic force. By opening the clamping portion, the optical fiber F can be inserted into the mechanical splice 103.

In a state where the built-in fiber 102 and the optical fiber F are in contact with each other inside the mechanical splice 103, the clamping portion is closed by pulling out the wedge body 81 from the mechanical splice 103. As a result, the connected state between the built-in fiber 102 and the optical fiber F can be maintained. The housing 104 accommodates the ferrule 101, the built-in fiber 102, the mechanical splice 103, and the like. The housing 104 is formed with two insertion holes through which the wedge body 81 is inserted. In the present embodiment, the wedge body 81 is inserted into the mechanical splice 103 from the -Z side. Therefore, the insertion holes of the housing 104 are also open downward. The optical connector 100 shown in the drawing has a single built-in fiber 102. However, the optical connector 100 may have a plurality of built-in fibers 102.

Returning to FIG. 1, the base member 30 supports the fiber holder 10 and the stripper support base 60.

The coating stripper 40 is disposed on the front side (-Y side) with respect to the connector holder 20. The coating stripper 40 is disposed to face the fiber holder 10 in a direction in which the optical fiber F extends from the fiber holder 10. The coating stripper 40 removes the coating f2 of the end portion of the optical fiber F extending from the fiber holder 10. An operation of the handle portion 50 actuates the coating stripper 40.

The handle portion 50 is a portion operated by the user. The handle portion 50 is connected to the link mechanism R. The operation of the handle portion 50 is transmitted to the coating stripper 40 via the link mechanism R.

The stripper support base 60 holds the connector holder 20, the handle portion 50, and the link mechanism R. The stripper support base 60 supports the coating stripper 40 via the link mechanism R. The stripper support base 60 is attached to the base member 30 so as to be movable in the extending direction X. When the stripper support base 60 moves in the extending direction X with respect to the base member 30, the link mechanism R, the coating stripper 40, the connector holder 20, and the handle portion 50 also move in the extending direction X integrally with the stripper support base 60.

The fiber cutting portion 70 is disposed on the front side (-Y side) with respect to the connector holder 20. A position of the fiber cutting portion 70 in the extending direction X is fixed with respect to the base member 30. Therefore, when the stripper support base 60 moves in the extending direction X with respect to the base member 30, the stripper support base 60, the link mechanism R, the coating stripper 40, the connector holder 20, and the handle portion 50 move with respect to the fiber cutting portion 70. The fiber cutting portion 70 cuts the bare portion f1 of the optical fiber F from which the coating f2 is removed by the coating stripper 40. Note that the fiber cutting portion 70 may cut the optical fiber F together with the coating f2. In this case, the optical fiber processing tool 1 need not have the coating stripper 40.

### <Details of structure of each unit>

### <Base member 30>

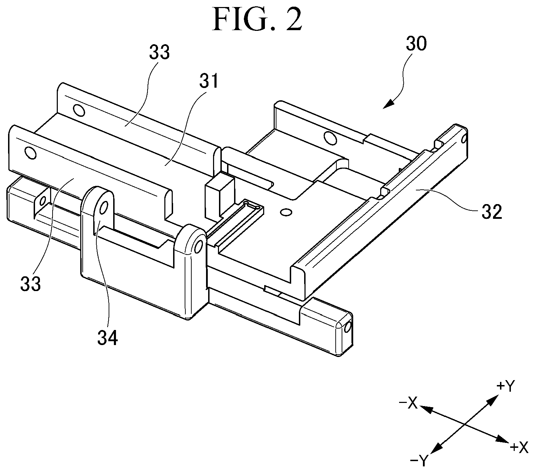

As shown in FIG. 2, the base member 30 includes a base member main body 31, a guide rail 32, a pair of slide rails 33, and a rotation support portion 34. The base member main body 31 is formed in a substantially rectangular plate shape that is long in the extending direction X. A cutting blade 71 of the fiber cutting portion 70, which will be described below, is fixed to the base member main body 31. The guide rail 32 is provided at an end portion of the base member main body 31 on the right side (+X side). The guide rail 32 is provided to protrude upward (+Z side) from an upper surface of the base member main body 31. The guide rail 32 extends in the orthogonal direction Y from a position corresponding to the coating stripper 40 to a position corresponding to the connector holder 20 in the orthogonal direction Y. The guide rail 32 guides movement of the fiber holder 10 in the orthogonal direction Y. The pair of slide rails 33 are provided at both end portions of the base member main body 31 in the orthogonal direction Y. The slide rails 33 are provided to protrude upward (+Z side) from the upper surface of the base member main body 31. The slide rails 33 extend in the extending direction X. The guide rails 32 guide movement of the stripper support base 60 in the extending direction X. The rotation support portion 34 is provided at the end portion of the base member main body 31 on the front side (-Y side). The rotation support portion 34 is disposed on the front side (-Y side) with respect to the slide rail 33. The rotation support portion 34 rotatably supports a cutting clamp 72 of the fiber cutting portion 70, which will be described below, about an axis along the extending direction X.

### <Fiber holder 10>

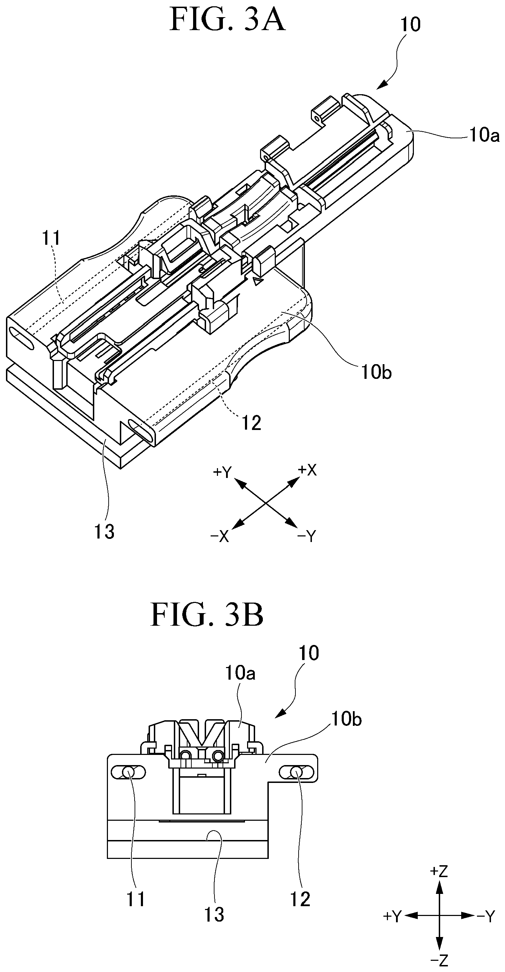

As shown in FIGS. 3A and 3B, the fiber holder 10 has a structure in which a first holder member 10a and a second holder member 10b are combined. The first holder member 10a is a portion that holds the optical fiber F. The first holder member 10a is attachable to and detachable from the second holder member 10b. For example, a plurality of types of the first holder members 10a may be prepared according to a type (diameter or the like) of the optical fiber F. In this case, the optical fiber processing tool 1 can process various types of the optical fibers F by replacing the first holder member 10a. Note that the fiber holder 10 may be a single member. That is, the first holder member 10a and the second holder member 10b may be integrated.

The second holder member 10b has a first guide hole 11 and a second guide hole 12. The first guide hole 11 and the second guide hole 12 extend in the extending direction X. The first guide hole 11 and the second guide hole 12 are open to an end surface of the second holder member 10b facing the left side (-X side). The first guide hole 11 and the second guide hole 12 are disposed at an interval in the orthogonal direction Y. When viewed from the vertical direction Z, the first guide hole 11 and the second guide hole 12 are disposed to sandwich the first holder member 10a therebetween.

A guide groove 13 is formed at an end portion of the second holder member 10b on the left side (-X side). The guide groove 13 extends in the orthogonal direction Y. The guide groove 13 is formed over the entire second holder member 10b in the orthogonal direction Y. The guide groove 13 engages with the guide rail 32 of the base member 30. The fiber holder 10 is linearly movable in the orthogonal direction Y by being guided by the guide rail 32. As a result, the fiber holder 10 moves linearly in the orthogonal direction Y between an optical fiber cutting position P11 (see FIG. 14) and a connection position P12 (see FIG. 18). The optical fiber cutting position P11 is a position corresponding to the coating stripper 40 and the fiber cutting portion 70 in the orthogonal direction Y, where the coating stripper 40 removes the coating f2 of the optical fiber F and the fiber cutting portion 70 cuts the optical fiber F. The connection position P12 is a position corresponding to the connector holder 20 in the orthogonal direction Y, where the optical connector 100 held by the connector holder 20 is connected to the optical fiber F. Details of the optical fiber cutting position P11 and the connection position P12 will be described below.

### <Handle portion 50>

As shown in FIG. 4, the handle portion 50 includes a first handle 51 and a second handle 52. The first handle 51 and the second handle 52 extend in the extending direction X. A distance between the two handles 51 and 52 increases toward the left side (-X side). The first handle 51 and the second handle 52 are disposed side by side in the orthogonal direction Y. The first handle 51 is attached to the stripper support base 60 so as to be swingable about a first handle rotation shaft 51a. The second handle 52 is attached to the stripper support base 60 so as to be swingable about a second handle rotation shaft 52a. A first end portion (end portion on the -X side) of the first handle 51 and a first end portion (end portion on the -X side) of the second handle 52 are operated by the user.

### <Link mechanism R>

The link mechanism R is disposed on the right side (+X side) with respect to the handle portion 50. The link mechanism R includes a first link member 53 and a second link member 54. The first link member 53 and the second link member 54 extend in the extending direction X. The first link member 53 and the second link member 54 are disposed side by side in the orthogonal direction Y. The first link member 53 is attached to the stripper support base 60 so as to be swingable about a first link rotation shaft 53a. The second link member 54 is attached to the stripper support base 60 so as to be swingable about a second link rotation shaft 54a. A second end portion (end portion on the +X side) of the first handle 51 is connected to a first end portion (end portion on the -X side) of the first link member 53 so as to be relatively rotatable about a first connection shaft 53b. A second end portion (end portion on the +X side) of the second handle 52 is connected to a first end portion (end portion on the -X side) of the second link member 54 so as to be relatively rotatable about a second connection shaft 54b.

### <Coating stripper 40>

The coating stripper 40 is disposed on the right side (+X side) with respect to the link mechanism R. The coating stripper 40 includes a first stripper blade 41, a second stripper blade 42, a first blade holder 43, and a second blade holder 44. The first stripper blade 41 and the second stripper blade 42 are disposed side by side in the orthogonal direction Y.

Distal ends of the first stripper blade 41 and the second stripper blade 42 function as cutting blades that make a cut in the coating f2 of the optical fiber F. As shown in FIG. 5, a first avoidance recess portion 41a is formed at the distal end of the first stripper blade 41, and a second avoidance recess portion 42a is formed at the distal end of the second stripper blade 42. When the distal end of the first stripper blade 41 and the distal end of the second stripper blade 42 approach each other, the first avoidance recess portion 41a and the second avoidance recess portion 42a form a gap through which the bare portion f1 of the optical fiber F can pass. As a result, the first stripper blade 41 and the second stripper blade 42 can make a cut in the coating f2 of the optical fiber F while preventing damage to the bare portion f1.

The first blade holder 43 holds the first stripper blade 41 in a state where the distal end of the first stripper blade 41 is exposed. The second blade holder 44 holds the second stripper blade 42 in a state where the distal end of the second stripper blade 42 is exposed. The first stripper blade 41 is supported by a second end portion (end portion on the +X side) of the first link member 53 via the first blade holder 43, and the second stripper blade 42 is supported by a second end portion (end portion on the +X side) of the second link member 54 via the second blade holder 44.

A positional relationship between the handle portion 50, the link mechanism R, and the coating stripper 40 will be described with reference to FIG. 4. In this positional relationship, the first handle rotation shaft 51a, the first connection shaft 53b, the first link rotation shaft 53a, and the first stripper blade 41 are disposed in that order from the left side (-X side) to the right side (+X side) in the extending direction X. The second handle rotation shaft 52a, the second connection shaft 54b, the second link rotation shaft 54a, and the second stripper blade 42 are disposed in that order from the left side (-X side) to the right side (+X side) in the extending direction X. That is, the first link rotation shaft 53a and the second link rotation shaft 54a are disposed at positions farther from the fiber holder 10 in the extending direction X than the first stripper blade 41 and the second stripper blade 42.

An actuation of the coating stripper 40 by the operation of the handle portion 50 will be described. When the user operates the first handle 51 and the second handle 52 such that the first end portion of the first handle 51 and the first end portion of the second handle 52 approach each other, the first handle 51 and the second handle 52 rotate about the first handle rotation shaft 51a and the second handle rotation shaft 52a, respectively, and the second end portion of the first handle 51 and the second end portion of the second handle 52 move away from each other. Accordingly, the first end portion of the first link member 53 and the first end portion of the second link member 54 also move away from each other.

As a result, the first link member 53 and the second link member 54 rotate about the first link rotation shaft 53a and the second link rotation shaft 54a, respectively, and the second end portion of the first link member 53 and the second end portion of the second link member 54 move toward each other. As a result, the distal end of the first stripper blade 41 and the distal end of the second stripper blade 42 approach each other, the optical fiber F is clamped between the first stripper blade 41 and the second stripper blade 42, and a cut is made in the coating f2 of the optical fiber F. In this case, since the bare portion f1 of the optical fiber F is disposed in the gap between the first avoidance recess portion 41a and the second avoidance recess portion 42a, damage to the bare portion f1 is prevented.

### <Stripper support base 60>

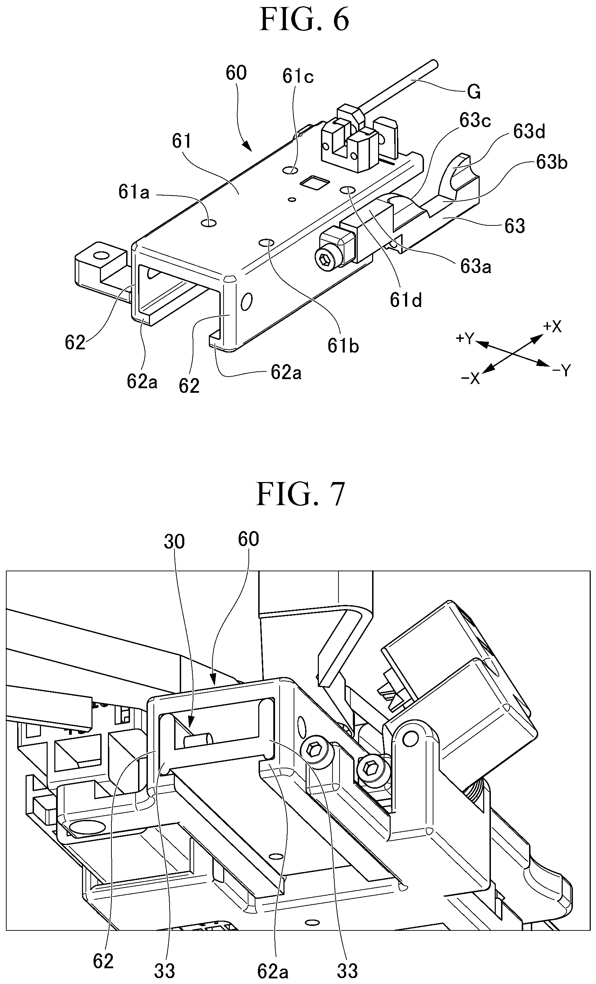

As shown in FIG. 6, the stripper support base 60 includes a stripper support base main body 61 and a pair of stripper-side guide portions 62. The stripper support base main body 61 is formed in a substantially rectangular plate shape that is long in the extending direction X. The stripper support base main body 61 is formed with holding holes 61a, 61b, 61c, and 61d for holding the first link rotation shaft 53a, the second link rotation shaft 54a, the first handle rotation shaft 51a, and the second handle rotation shaft 52a, respectively. The stripper support base main body 61 holds the handle portion 50 and the link mechanism R via the first link rotation shaft 53a, the second link rotation shaft 54a, the first handle rotation shaft 51a, and the second handle rotation shaft 52a.

The pair of stripper-side guide portions 62 are provided at both end portions of the stripper support base main body 61 in the orthogonal direction Y. The stripper-side guide portions 62 are provided to protrude from a lower surface of the stripper support base main body 61 toward the lower side (-Z side). The stripper-side guide portions 62 extend in the extending direction X. As shown in FIG. 7, the slide rail 33 of the base member 30 is disposed between the pair of stripper-side guide portions 62. A fall-off prevention protrusion 62a for preventing the slide rail 33 from falling off is formed at a lower end portion of the stripper-side guide portion 62. The stripper support base 60 is linearly movable in the extending direction X by being guided by the slide rail 33. As a result, the stripper support base 60 moves relative to the fiber holder 10 in the extending direction X between a coating cut position P21, a coating removal position P22, a bare portion cutting position P23, and a retracted position P24 (see FIGS. 14 to 17).

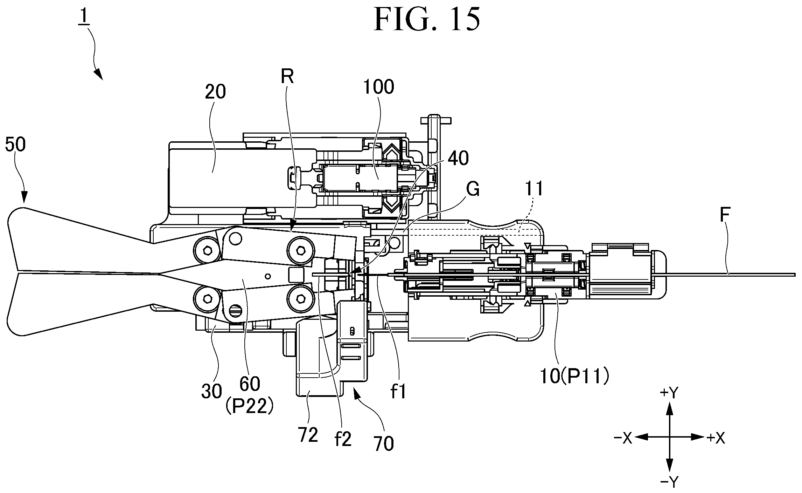

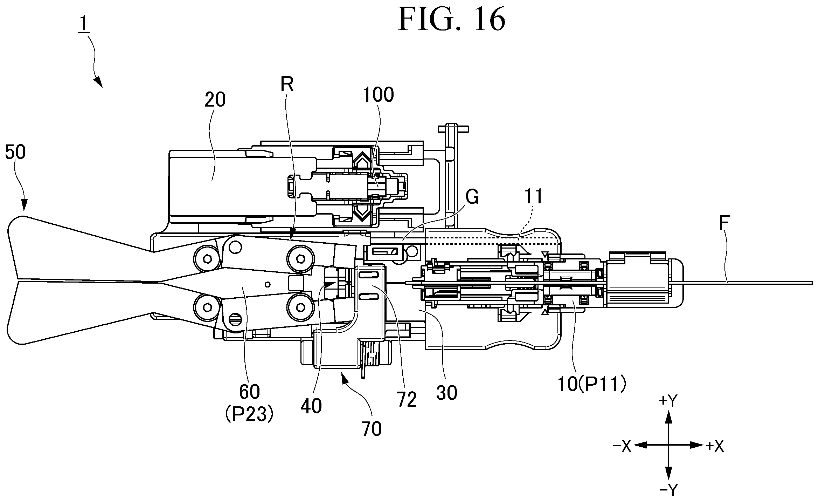

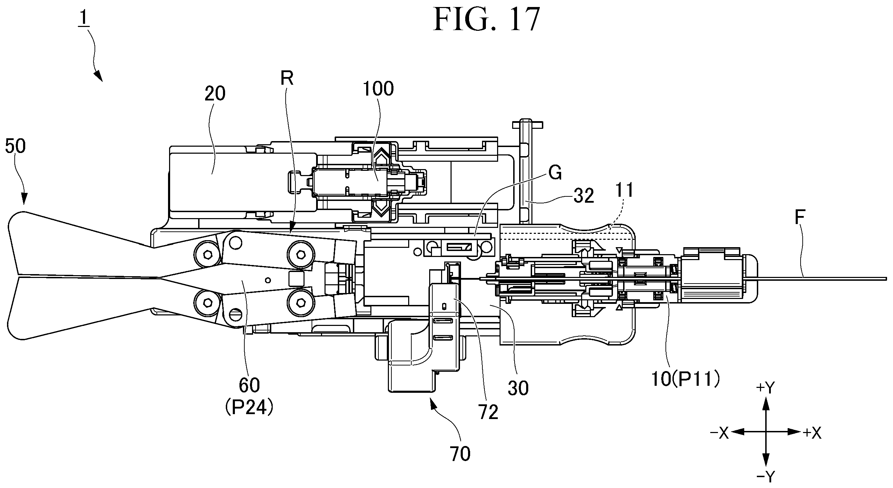

The coating cut position P21 shown in FIG. 14 is a position where the coating stripper 40 makes a cut in the coating f2. The coating removal position P22 shown in FIG. 15 is a position where the stripper support base 60 is spaced further from the fiber holder 10 than the coating cut position P21 and the coating f2 is removed from the bare portion f1. The bare portion cutting position P23 shown in FIG. 16 is a position where the stripper support base 60 is spaced further from the fiber holder 10 than the coating removal position P22 and the bare portion f1 is cut by the fiber cutting portion 70. The retracted position P24 shown in FIG. 17 is a position where the stripper support base 60 is spaced further from the fiber holder 10 than the bare portion cutting position P23. Details of the coating cut position P21, the coating removal position P22, the bare portion cutting position P23, and the retracted position P24 will be described below.

Returning to FIG. 6, a guide shaft G extending in the extending direction X is fixed to an end portion of the stripper support base 60 on the right side (+X side). The guide shaft G extends from the stripper support base 60 to the right side (+X side). The guide shaft G slides in the extending direction X together with the stripper support base 60. The guide shaft G is inserted through the first guide hole 11 or the second guide hole 12 of the fiber holder 10 to guide the relative movement of the stripper support base 60 with respect to the fiber holder 10 and to restrict the movement of the fiber holder 10 in the orthogonal direction Y.

In addition, an opening/closing link 63 is fixed to an end portion of the stripper support base 60 on the front side (-Y side). The opening/closing link 63 slides in the extending direction X together with the stripper support base 60. The opening/closing link 63 is a member for opening and closing the cutting clamp 72 of the fiber cutting portion 70 in conjunction with the movement of the stripper support base 60. Details of the opening/closing link 63 will be described below.

### <Fiber cutting portion 70>

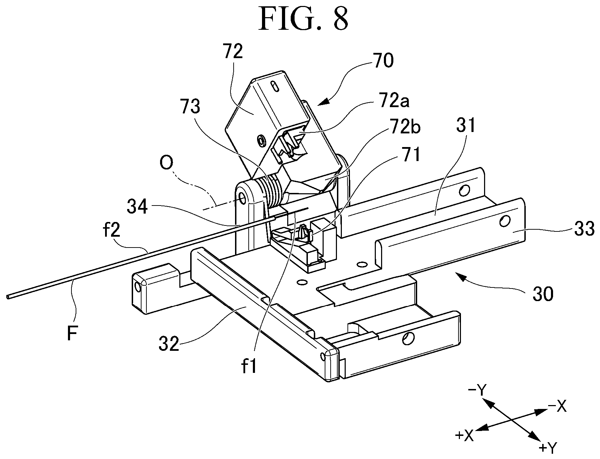

As shown in FIG. 8, the fiber cutting portion 70 includes the cutting blade 71 and the cutting clamp 72. The cutting blade 71 is fixed to the upper surface of the base member main body 31 of the base member 30. The cutting clamp 72 is disposed above the cutting blade 71. The cutting clamp 72 is rotatably supported by the rotation support portion 34 of the base member 30 around an axis O along the extending direction X. As a result, the cutting clamp 72 is movable between a state of being spaced apart from the cutting blade 71 as shown in FIG. 8, and a state of being close to the cutting blade 71 by rotating around the axis O. Hereinafter, a state in which the cutting clamp 72 is spaced apart from the cutting blade 71 will be referred to as an "open state", and a state in which the cutting clamp 72 is close to the cutting blade 71 will be referred to as a "closed state". The cutting clamp 72 is biased downward (that is, toward the closed state) by a biasing member 73. The biasing member 73 is, for example, a torsion coil spring.

The cutting clamp 72 has a pressing portion 72a and a rotation restricting portion 72b. The pressing portion 72a is disposed to face the cutting blade 71 in the vertical direction Z when the cutting clamp 72 is in the closed state. When the cutting clamp 72 is in the closed state, the pressing portion 72a presses the bare portion f1 against the cutting blade 71. As a result, the bare portion f1 is cut.

The rotation restricting portion 72b is provided at a lower portion of the cutting clamp 72. The rotation restricting portion 72b restricts downward rotation of the cutting clamp 72 against the biasing force of the biasing member 73 by coming into contact with the opening/closing link 63 fixed to the stripper support base 60. Here, as described above, the cutting clamp 72 (rotation restricting portion 72b) is fixed to the base member 30, and the opening/closing link 63 is fixed to the stripper support base 60. Therefore, when the stripper support base 60 linearly moves in the extending direction X, the opening/closing link 63 moves relative to the rotation restricting portion 72b in the extending direction X. In the present embodiment, the cutting clamp 72 can be moved (rotated) from the open state to the closed state or from the closed state to the open state by the relative movement between the opening/closing link 63 and the rotation restricting portion 72b.

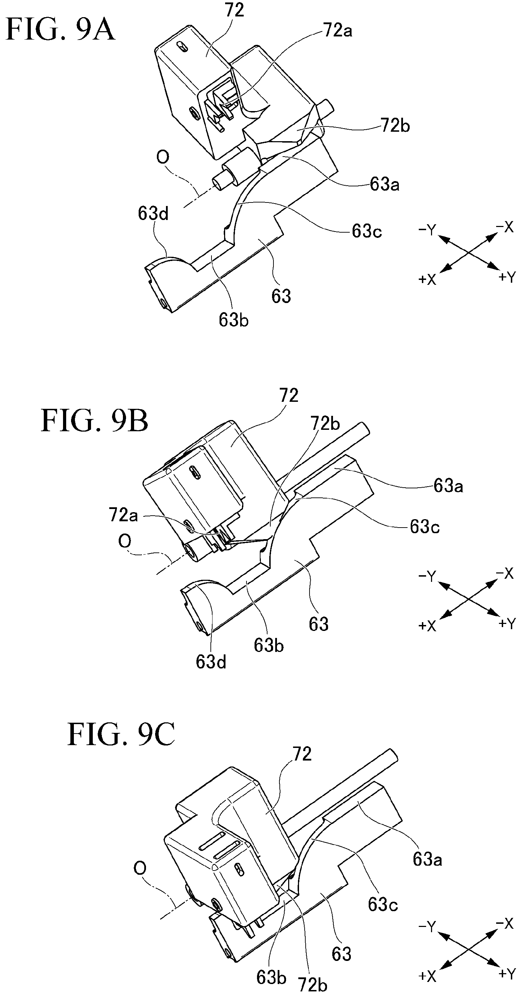

The movement (rotation) of the cutting clamp 72 will be described in detail with reference to FIGS. 9A to 9C. The opening/closing link 63 has a restricting surface 63a, a restriction release surface 63b, a first connecting surface 63c, and a second connecting surface 63d. The restricting surface 63a and the restriction release surface 63b face the upper side (+Z side). The restricting surface 63a is disposed at a position farther from the fiber holder 10 in the extending direction X (that is, on the -X side) than the restriction release surface 63b. The restricting surface 63a is located above (on the +Z side of) the restriction release surface 63b. The first connecting surface 63c connects the restricting surface 63a and the restriction release surface 63b. The first connecting surface 63c is an inclined surface that is inclined downward (-Z side) as the first connecting surface 63c goes from the restricting surface 63a to the fiber holder 10 side (+X side). The first connecting surface 63c may be linear or curved when viewed from the orthogonal direction Y. Alternatively, the first connecting surface 63c may be stepped. The second connecting surface 63d is connected to the restriction release surface 63b. The second connecting surface 63d is an inclined surface that is inclined upward (+Z side) as the second connecting surface 63d goes from the restriction release surface 63b to the fiber holder 10 side (+X side). The second connecting surface 63d may be linear or curved when viewed from the orthogonal direction Y.

As shown in FIG. 9A, when the rotation restricting portion 72b is at the same position as the restricting surface 63a in the extending direction X, the rotation restricting portion 72b comes into contact with the restricting surface 63a, thereby restricting the downward rotation of the cutting clamp 72. FIG. 9A shows a state in which the stripper support base 60 is at the coating cut position P21. As shown in FIG. 9B, when the rotation restricting portion 72b moves from the restricting surface 63a to the fiber holder 10 side (+X side) with respect to the opening/closing link 63, the rotation restricting portion 72b comes into contact with the first connecting surface 63c, and, as a result, the cutting clamp 72 gradually rotates downward. FIG. 9B shows a state in which the stripper support base 60 is at the coating removal position P22. As shown in FIG. 9C, when the rotation restricting portion 72b is at the same position as the restriction release surface 63b in the extending direction X, the rotation restricting portion 72b does not come into contact with the opening/closing link 63 (restriction release surface 63b), and the restriction on the rotation of the cutting clamp 72 is released, so that the cutting clamp 72 moves to the closed state due to the biasing force of the biasing member 73. FIG. 9C shows a state in which the stripper support base 60 is at the bare portion cutting position P23. In addition, although not shown, when the rotation restricting portion 72b further moves from the restriction release surface 63b to the fiber holder 10 side (+X side) with respect to the opening/closing link 63, the rotation restricting portion 72b comes into contact with the second connecting surface 63d, and, as a result, the cutting clamp 72 gradually returns to the open state.

### <Connector holder 20>

As shown in FIG. 10, the connector holder 20 includes a holding member 21, the wedge 80, a wedge link 83, a wedge actuating member 90, a fiber biasing spring 92, and a return spring 93. The holding member 21 is fixed to the base member 30. The holding member 21 holds the wedge link 83. The wedge actuating member 90 is movable relative to the holding member 21 in the extending direction X. When the wedge actuating member 90 moves relative to the holding member 21, the wedge link 83 and the wedge actuating member 90 also move relative to each other in the extending direction X.

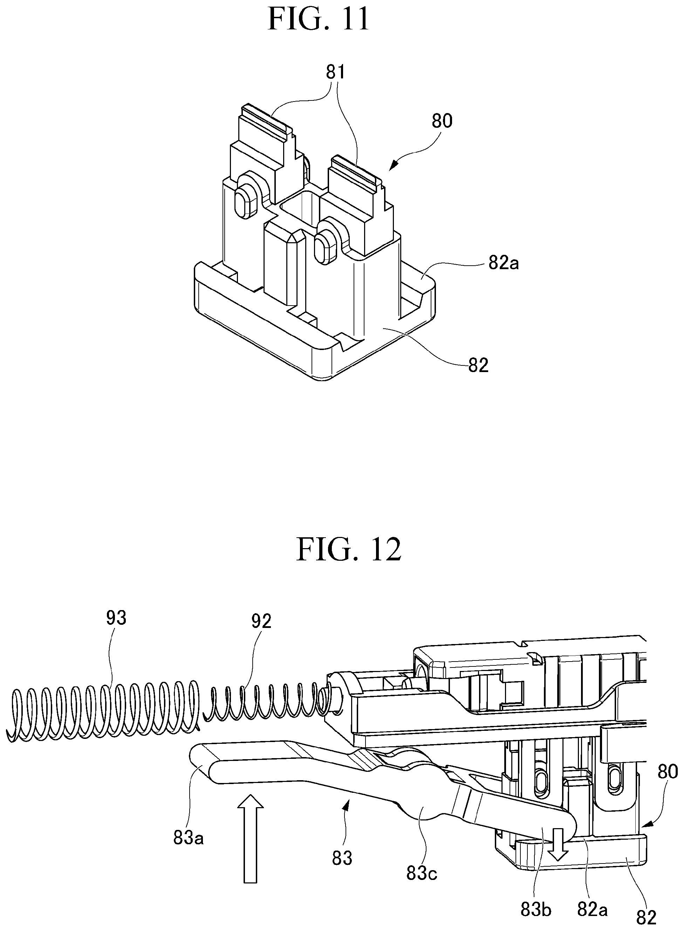

The wedge 80 can be inserted into and removed from the mechanical splice 103 of the optical connector 100, and enables connection between the built-in fiber 102 built into the optical connector 100 and the optical fiber F. As shown in FIG. 11, the wedge 80 includes the wedge body 81 and a wedge holder 82. The wedge holder 82 is formed with a third interlocking portion 82a. A lower surface of the wedge holder 82 is exposed to the outside. The user can move the wedge body 81 upward by pushing the lower surface of the wedge holder 82 up. As a result, the wedge body 81 can be inserted into the mechanical splice 103.

As shown in FIG. 10, the wedge actuating member 90 has an inclined surface 91. The inclined surface 91 faces the wedge link 83 in the extending direction X. The inclined surface 91 is inclined to the +Z side as it approaches the -X side. In addition, the wedge actuating member 90 holds the fiber biasing spring 92 and the return spring 93.

The fiber biasing spring 92 generates a biasing force for pressing the optical fiber F against the built-in fiber 102 inside the mechanical splice 103. The biasing force of the fiber biasing spring 92 is set to ensure the optical connection between the built-in fiber 102 and the optical fiber F.

The return spring 93 serves to return the wedge actuating member 90 and the like to their original positions after the optical fiber F is connected to the optical connector 100.

The optical fiber processing tool 1 has an interlocking mechanism M. The interlocking mechanism M is interlocked with the operation of the wedge actuating member 90 with respect to the holding member 21, and removes the wedge 80 from the mechanical splice 103 of the optical connector 100. The interlocking mechanism M includes the wedge link 83. As shown in FIG. 12, the wedge link 83 has a first interlocking portion 83a that comes into contact with the inclined surface 91, a second interlocking portion 83b that comes into contact with the wedge 80, and a rotation center 83c that is located between the first interlocking portion 83a and the second interlocking portion 83b. The third interlocking portion 82a of the wedge 80 comes into contact with the second interlocking portion 83b. When the second interlocking portion 83b moves downward, the third interlocking portion 82a is also pushed downward. The interlocking mechanism M converts the linear motion of the wedge actuating member 90 in the extending direction X into the rotational motion of the wedge link 83, and moves the wedge 80 by the rotational motion of the wedge link 83.

### <Work procedure and function of each unit>

Next, a work procedure and a function of each unit when processing the optical fiber F using the optical fiber processing tool 1 configured as described above will be described.

In the initial state, the fiber holder 10 is located at the optical fiber cutting position P11, and the stripper support base 60 is located at the coating cut position P21. When the fiber holder 10 is at the optical fiber cutting position P11, the coating stripper 40 faces the fiber holder 10 in the extending direction X. When the fiber holder 10 is at the optical fiber cutting position P11, the position of the guide shaft G and the position of the first guide hole 11 of the fiber holder 10 in the orthogonal direction Y coincide with each other. In addition, when the stripper support base 60 is at the coating cut position P21, the cutting blade 71 of the fiber cutting portion 70 is covered by the stripper support base 60, and the stripper support base 60 is located between the cutting blade 71 and the cutting clamp 72.

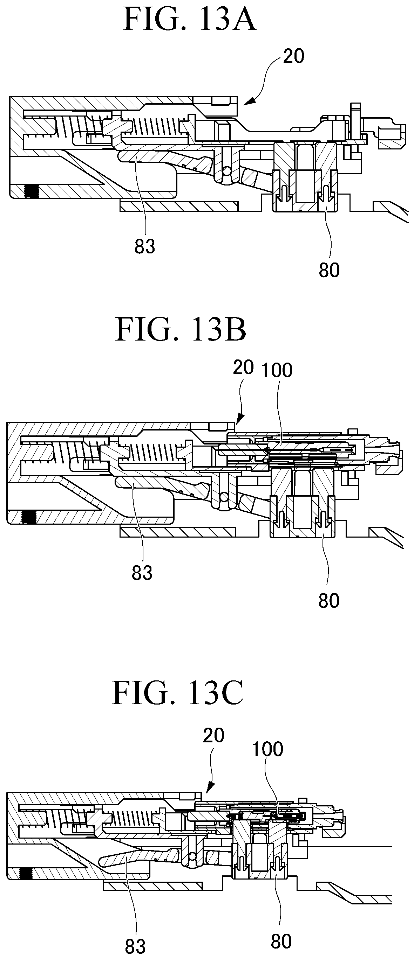

In the initial state, no optical fiber F is set in the fiber holder 10. In addition, as shown in FIG. 13A, no optical connector 100 is set in the connector holder 20. First, the user sets the optical fiber F in the fiber holder 10. In addition, as shown in FIG. 13B, the optical connector 100 is set in the connector holder 20. In this case, the wedge 80 is on standby below the optical connector 100. Next, the user pushes the wedge 80 up with a finger or the like. As a result, as shown in FIG. 13C, the wedge 80 is inserted into the mechanical splice 103. As the wedge 80 is inserted, the wedge link 83 is displaced.

Next, as shown in FIG. 14, the user operates the handle portion 50 to cause the distal end of the first stripper blade 41 and the distal end of the second stripper blade 42 to approach each other. As a result, the optical fiber F is clamped between the first stripper blade 41 and the second stripper blade 42, and a cut is made in the coating f2 of the optical fiber F. In this case, since the bare portion f1 of the optical fiber F is disposed in the gap between the first avoidance recess portion 41a and the second avoidance recess portion 42a, damage to the bare portion f1 is prevented.

Next, as shown in FIG. 15, the stripper support base 60 is spaced further from the fiber holder 10 than the coating cut position P21 and is moved to the coating removal position P22. The stripper support base 60 may be moved to the left side (-X side) with respect to the fiber holder 10, or the fiber holder 10 may be moved to the right side (+X side) with respect to the stripper support base 60. In this case, the guide shaft G is inserted through the first guide hole 11 of the fiber holder 10, and the relative movement of the stripper support base 60 with respect to the fiber holder 10 is guided. In addition, the movement of the fiber holder 10 in the orthogonal direction Y is restricted.

The coating stripper 40 (the first stripper blade 41 and the second stripper blade 42) moves together with the stripper support base 60 in a direction away from the fiber holder 10. With a cut made in the coating f2 of the optical fiber F, the optical fiber F is clamped between the first stripper blade 41 and the second stripper blade 42. Therefore, as the coating stripper 40 moves, a portion of the coating f2 of the optical fiber F on the left side (-X side) with respect to the coating stripper 40 is removed from the bare portion f1, and the bare portion f1 is exposed. When the stripper support base 60 reaches the coating removal position P22, the coating f2 is completely removed from the bare portion f1. In other words, the "predetermined length" by which the end portion of the optical fiber F extends from the fiber holder 10 is determined such that the coating f2 falls off from the bare portion f1 when the stripper support base 60 is moved from the coating cut position P21 to the coating removal position P22.

Next, as shown in FIG. 16, the stripper support base 60 is spaced further from the fiber holder 10 than the coating removal position P22 and is moved to the bare portion cutting position P23. In this case, the guide shaft G is inserted through the first guide hole 11 of the fiber holder 10, and the relative movement of the stripper support base 60 with respect to the fiber holder 10 is guided. In addition, the movement of the fiber holder 10 in the orthogonal direction Y is restricted.

When the stripper support base 60 is at the bare portion cutting position P23, the stripper support base 60 is spaced from the cutting blade 71 and the cutting clamp 72 in the extending direction X. That is, when the stripper support base 60 is at the bare portion cutting position P23, the cutting blade 71 is exposed from the stripper support base 60. In addition, when the stripper support base 60 reaches the bare portion cutting position P23, as shown in FIG. 9C, the restriction on the rotation of the cutting clamp 72 by the rotation restricting portion 72b is released, and the cutting clamp 72 moves to the closed state. As the cutting blade 71 and the cutting clamp 72 approach each other, the pressing portion 72a of the cutting clamp 72 presses the bare portion f1 against the cutting blade 71, and the bare portion f1 is cut.

Next, as shown in FIG. 17, the stripper support base 60 is spaced further from the fiber holder 10 than the bare portion cutting position P23 and is moved to the retracted position P24. In this case, the rotation restricting portion 72b moves from the restriction release surface 63b to the fiber holder 10 side (+X side), and the rotation restricting portion 72b comes into contact with the second connecting surface 63d, so that the cutting clamp 72 gradually returns to the open state. That is, when the stripper support base 60 is at the retracted position P24, the cutting blade 71 and the cutting clamp 72 move away from each other. In addition, when the stripper support base 60 reaches the retracted position P24, the guide shaft G is disengaged from the first guide hole 11 of the fiber holder 10. This allows the fiber holder 10 to move in the orthogonal direction Y.

Next, as shown in FIG. 18, the fiber holder 10 is moved from the optical fiber cutting position P11 to the connection position P12. The fiber holder 10 is guided by the guide rail 32 to move linearly in the orthogonal direction Y. When the fiber holder 10 is at the connection position P12, the connector holder 20 faces the fiber holder 10 in the extending direction X. When the fiber holder 10 is at the connection position P12, the position of the guide shaft G and the position of the second guide hole 12 of the fiber holder 10 in the orthogonal direction Y coincide with each other.

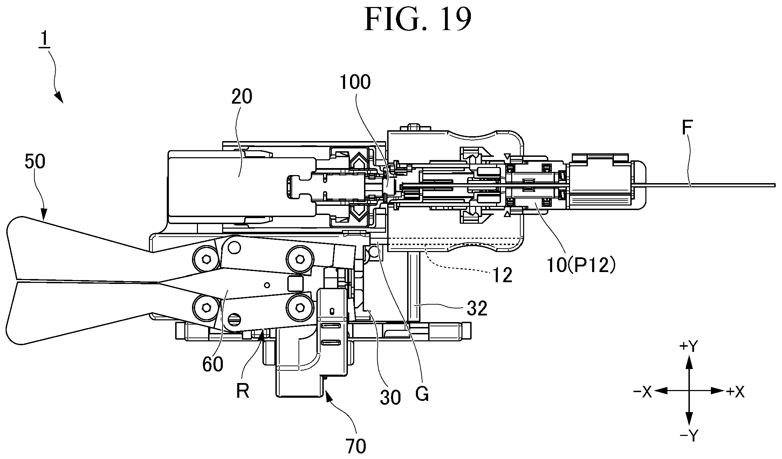

Next, as shown in FIG. 19, the fiber holder 10 is moved toward the optical connector 100 held by the connector holder 20. As a result, the optical fiber F held by the fiber holder 10 can be connected to the built-in fiber 102 built into the optical connector 100. In this case, the guide shaft G is inserted through the second guide hole 12 of the fiber holder 10, and the relative movement of the fiber holder 10 with respect to the optical connector 100 is guided.

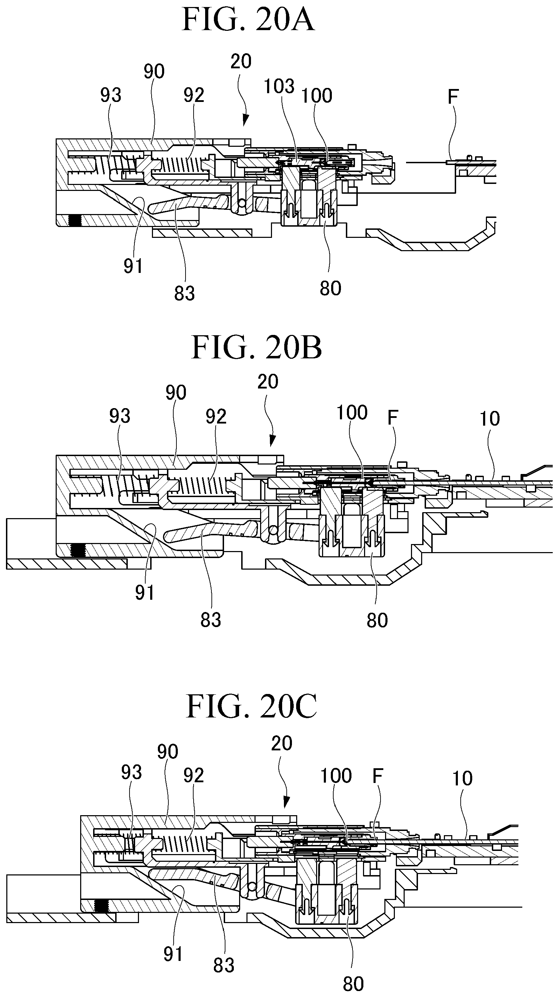

The above operations result in a state shown in FIG. 20A. Next, as shown in FIG. 20B, the optical connector 100 is brought close to the fiber holder 10 along with the connector holder 20. As a result, the optical fiber F held by the fiber holder 10 is inserted into the mechanical splice 103 in the optical connector 100. In addition, the optical fiber F and the built-in fiber 102 come into contact with each other in the mechanical splice 103. In this case, a biasing force by the fiber biasing spring 92 acts to press the optical fiber F and the built-in fiber 102 against each other with an appropriate force. Next, as shown in FIG. 20C, the wedge actuating member 90 is pushed toward the fiber holder 10. This rotates the wedge link 83, and the wedge 80 is pushed down. The wedge 80 is removed from the mechanical splice 103, thereby fixing the optical fiber F to the optical connector 100. With this, the connection between the optical fiber F and the optical connector 100 is completed.

As described above, the optical fiber processing tool 1 of the present embodiment includes the fiber holder 10 that holds the optical fiber F in a state where the end portion of the optical fiber F extends to one side (-X side), the fiber cutting portion 70 that cuts the optical fiber F, the connector holder 20 that holds the optical connector 100, and the guide rail 32 that guides the movement of the fiber holder 10. The fiber cutting portion 70 and the connector holder 20 are disposed at an interval in the orthogonal direction Y. The fiber holder 10 is linearly movable in the orthogonal direction Y between the optical fiber cutting position P11 where the fiber cutting portion 70 cuts the optical fiber F and the connection position P12 where the optical connector 100 is connected to the optical fiber F while being guided by the guide rail 32.

With the optical fiber processing tool 1, by moving the fiber holder 10 between the optical fiber cutting position P11 and the connection position P12, the work of cutting the optical fiber F and the work of connecting the optical fiber F to the optical connector 100 can be performed. Therefore, it is possible to save the time and effort of switching between a tool for cutting the optical fiber and a tool for fixing the optical fiber to the optical connector. As a result, it is possible to improve the work efficiency when processing the optical fiber F. For example, even in a case where there is no workbench or the like at a site where the optical fiber F is to be processed, the user can easily process the optical fiber F.

In addition, the optical fiber processing tool 1 further includes the coating stripper 40 that removes the coating f2 of the optical fiber F. When the fiber holder 10 is at the optical fiber cutting position P11, the coating stripper 40 faces the fiber holder 10 in the extending direction X. With this configuration, it is also possible to perform the work of removing the coating f2 of the optical fiber F using the optical fiber processing tool 1.

In addition, the optical fiber processing tool 1 further includes the guide shaft G that extends in the extending direction X. The coating stripper 40 is slidable in the extending direction X together with the guide shaft G. The fiber holder 10 has the first guide hole 11 and the second guide hole 12 that extend in the extending direction X. The first guide hole 11 and the second guide hole 12 are disposed at an interval in the orthogonal direction Y. When the fiber holder 10 is at the optical fiber cutting position P11, the position of the guide shaft G and the position of the first guide hole 11 in the orthogonal direction Y coincide with each other. When the fiber holder 10 is at the connection position P12, the position of the guide shaft G and the position of the second guide hole 12 in the orthogonal direction Y coincide with each other. With this configuration, the positioning accuracy of the fiber holder 10 is improved when the optical fiber F is cut by the fiber cutting portion 70 and when the optical fiber F is connected to the optical connector 100. In addition, by providing both the first guide hole 11 and the second guide hole 12 in the fiber holder 10, it is possible to improve the positioning accuracy of the fiber holder 10 described above while suppressing an increase in size of the optical fiber processing tool 1.

In addition, the coating stripper 40 includes the first stripper blade 41 and the second stripper blade 42. The first stripper blade 41 is supported by the first link member 53, and the second stripper blade 42 is supported by the second link member 54. The first link member 53 is swingable about the first link rotation shaft 53a, and the second link member 54 is swingable about the second link rotation shaft 54a. The first link rotation shaft 53a and the second link rotation shaft 54a are disposed at positions farther from the fiber holder 10 in the extending direction X than the first stripper blade 41 and the second stripper blade 42. With this configuration, the length of the portion where the coating f2 is removed by the coating stripper 40 can be shortened, so that the probability of damage to the optical fiber F can be reduced.

The optical fiber processing tool 1 includes the fiber holder 10 that holds the optical fiber F in a state where the end portion of the optical fiber F extends to one side (-X side), the coating stripper 40 that removes a portion of the coating f2 of the optical fiber F, the stripper support base 60 that supports the coating stripper 40, and the fiber cutting portion 70 that cuts the bare portion f1 of the optical fiber F. The stripper support base 60 is movable relative to the fiber holder 10 in the extending direction X between the coating cut position P21 where the coating stripper 40 makes a cut in the coating f2, the coating removal position P22 spaced further from the fiber holder 10 than the coating cut position P21, where the coating f2 is removed from the bare portion f1, and the bare portion cutting position P23 spaced further from the fiber holder 10 than the coating removal position P22, where the bare portion f1 is cut by the fiber cutting portion 70.

With the optical fiber processing tool 1, the work of removing the coating f2 of the optical fiber F and cutting the optical fiber F can be performed by moving the stripper support base 60. Therefore, for example, it is possible to save the time and effort of switching between a tool for coating removal and a tool for optical fiber cutting. As a result, it is possible to improve the work efficiency when processing the optical fiber F. In addition, since the positional relationship between the coating removal and the fiber cutting is kept constant, the length of the bare portion f1 of the optical fiber F can be kept constant at all times.

The fiber cutting portion 70 has the cutting blade 71 and the cutting clamp 72 that presses the bare portion f1 against the cutting blade 71. The stripper support base 60 is movable to the retracted position P24 that is spaced further from the fiber holder 10 than the bare portion cutting position P23. When the stripper support base 60 is at the bare portion cutting position P23, the cutting blade 71 and the cutting clamp 72 approach each other such that the bare portion f1 is cut. With this configuration, when the stripper support base 60 is at the bare portion cutting position P23, the optical fiber F can be reliably cut by the fiber cutting portion 70.

When the bare portion f1 is cut and the stripper support base 60 is at the retracted position P24, the cutting blade 71 and the cutting clamp 72 move away from each other. With this configuration, by moving the stripper support base 60, it is also possible to perform the work of separating the cutting blade 71 and the cutting clamp 72 from each other after cutting the optical fiber F.

When the stripper support base 60 is at the coating cut position P21, the stripper support base 60 is located between the cutting blade 71 and the cutting clamp 72. When the stripper support base 60 is at the bare portion cutting position P23, the stripper support base 60 is spaced from the cutting blade 71 and the cutting clamp 72 in the extending direction X. With this configuration, the size of the optical fiber processing tool 1 in the extending direction X can be reduced.

The link mechanism R that actuates the coating stripper 40 is further provided. The coating stripper 40 includes the first stripper blade 41 and the second stripper blade 42. The link mechanism R includes the first link member 53 that supports the first stripper blade 41 and the second link member 54 that supports the second stripper blade 42. The first link member 53 is swingable about the first link rotation shaft 53a, and the second link member 54 is swingable about the second link rotation shaft 54a. The first handle 51 is connected to the first link member 53, and the second handle 52 is connected to the second link member 54. The first handle 51 is swingable about the first handle rotation shaft 51a, and the second handle 52 is swingable about the second handle rotation shaft 52a. With this configuration, by operating the first handle 51 and the second handle 52, the coating stripper 40 can be actuated via the link mechanism R to perform the work of removing the coating f2 of the optical fiber F.

The optical fiber processing tool 1 includes the fiber holder 10 that holds the optical fiber F in a state where the end portion of the optical fiber F extends to one side (-X side), the connector holder 20 that holds the optical connector 100, the wedge 80 that is insertable into and removable from the mechanical splice 103 of the optical connector 100 and that enables connection between the built-in fiber 102 built into the optical connector 100 and the optical fiber F, the wedge actuating member 90 that is movable relative to the connector holder 20, and the interlocking mechanism M that interlocks with the relative movement of the wedge actuating member 90 and that removes the wedge 80 from the mechanical splice 103.

With the optical fiber processing tool 1, the built-in fiber 102 and the optical fiber F can be connected to each other by using the wedge 80, and the wedge 80 can be removed from the mechanical splice 103 by using the interlocking mechanism M. Therefore, it is possible to improve the work efficiency when processing the optical fiber F.

In addition, the interlocking mechanism M includes the wedge link 83. The wedge actuating member 90 has the inclined surface 91. The wedge link 83 has the first interlocking portion 83a that comes into contact with the inclined surface 91, the second interlocking portion 83b that comes into contact with the wedge 80, and the rotation center 83c that is located between the first interlocking portion 83a and the second interlocking portion 83b. The interlocking mechanism M converts the linear motion of the wedge actuating member 90 in the extending direction X into the rotational motion of the wedge link 83, and moves the wedge 80 by the rotational motion of the wedge link 83. With this configuration, the wedge 80 can be removed from the mechanical splice 103 by using the linear motion of the wedge actuating member 90, such as an operation of pushing the wedge actuating member 90 toward the fiber holder 10.

The technical scope of the present invention is not limited to the above-described embodiment, and various modifications can be made without departing from the spirit of the present invention.

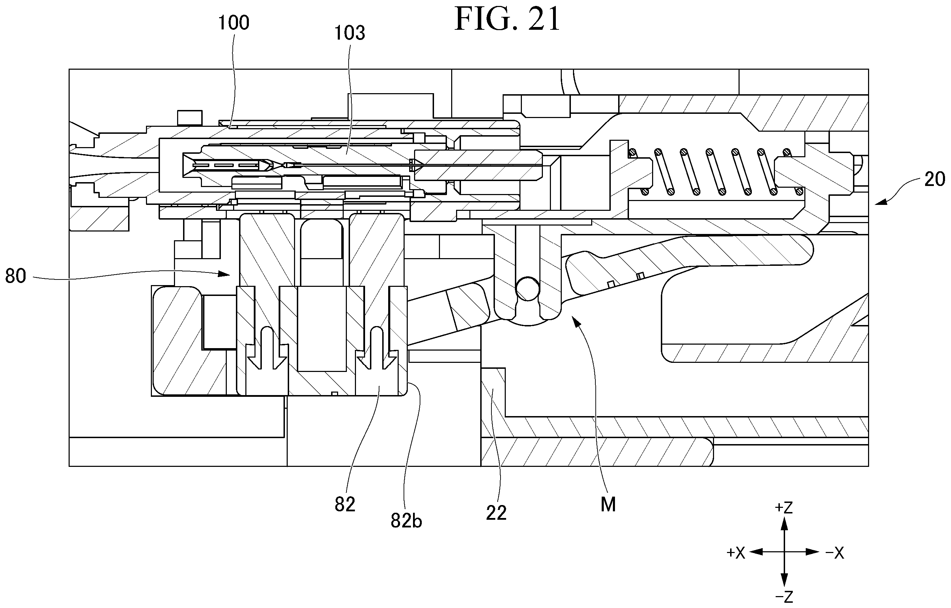

For example, a structure for preventing an erroneous operation by the user may be provided. As an example of the erroneous operation, there is a possibility of the optical fiber F being inserted into the mechanical splice 103 before the wedge 80 is inserted into the mechanical splice 103. In a case where this erroneous operation is performed, the optical fiber F may strike the vicinity of an inlet of the mechanical splice 103, which could cause bending or damage to the optical fiber F. As a structure for preventing this erroneous operation, the optical fiber processing tool 1 shown in FIG. 21 has a first restricting portion 82b and a second restricting portion 22.

The first restricting portion 82b and the second restricting portion 22 restrict the fiber holder 10 and the connector holder 20 from approaching each other in a state where the wedge 80 is not inserted into the mechanical splice 103. In addition, the first restricting portion 82b and the second restricting portion 22 allow the fiber holder 10 and the connector holder 20 to approach each other in a state where the wedge 80 is inserted into the mechanical splice 103.

More specifically, the first restricting portion 82b is a side surface of the wedge holder 82. In addition, the second restricting portion 22 is a portion of the connector holder 20 and is disposed to face the first restricting portion 82b in the extending direction X. In a case where the optical connector 100 and the optical fiber F are brought close to each other before the wedge 80 is inserted into the mechanical splice 103, the second restricting portion 22 comes into contact with the first restricting portion 82b. That is, the optical fiber F cannot be brought close to the optical connector 100. Therefore, the erroneous operation can be prevented.

In a normal operation, first, the wedge 80 is inserted into the mechanical splice 103. Then, the first restricting portion 82b moves upward, so that the positions of the first restricting portion 82b and the second restricting portion 22 are shifted from each other in the vertical direction Z. As a result, when the optical fiber F is brought close to the optical connector 100, the second restricting portion 22 passes below the first restricting portion 82b. Therefore, the optical fiber F can be inserted into the mechanical splice 103.

In addition, in the above-described embodiment, the fiber cutting portion 70 is configured such that the cutting blade 71 is fixed to the base member 30 and the cutting clamp 72 is movable between a state of being spaced apart from the cutting blade 71 and a state of being close to the cutting blade 71. However, the fiber cutting portion 70 may be configured such that the cutting clamp 72 is fixed to the base member 30 and the cutting blade 71 is movable. Note that it is more preferable that the cutting blade 71 be fixed to the base member 30 because the cutting (cutting position or the like) of the optical fiber F is stable.

In addition, it is possible to appropriately replace the constituent elements in the above-described embodiment with well-known constituent elements, and the above-described embodiments and modification examples may be combined as appropriate without departing from the spirit of the present invention.

### REFERENCE SIGNS LIST

1 Optical fiber processing tool
10 Fiber holder
10a First holder member
10b Second holder member
11 First guide hole
12 Second guide hole
13 Guide groove
20 Connector holder
21 Holding member
22 Second restricting portion
30 Base member
31 Base member main body
32 Guide rail
33 Slide rail
34 Rotation support portion
40 Coating stripper
41 First stripper blade
41a First avoidance recess portion
42 Second stripper blade
42a Second avoidance recess portion
43 First blade holder
44 Second blade holder
50 Handle portion
51 First handle
51a First handle rotation shaft
52 Second handle
52a Second handle rotation shaft
53 First link member
53a First link rotation shaft
53b First connection shaft
54 Second link member
54a Second link rotation shaft
54b Second connection shaft
60 Stripper support base
61 Stripper support base main body
62 Stripper-side guide portion
62a Fall-off prevention protrusion
63 Opening/closing link
63a Restricting surface
63b Restriction release surface
63c First connecting surface
63d Second connecting surface
70 Fiber cutting portion
71 Cutting blade
72 Cutting clamp
72a Pressing portion
72b Rotation restricting portion
73 Biasing member
80 Wedge
81 Wedge body
82 Wedge holder
82a Third interlocking portion
82b First restricting portion
83 Wedge link
83a First interlocking portion
83b Second interlocking portion
83c Rotation center
90 Wedge actuating member
91 Inclined surface
92 Fiber biasing spring
93 Return spring
100 Optical connector
101 Ferrule
101a Fiber hole
102 Built-in fiber
103 Mechanical splice
104 Housing
F Optical fiber
f1 Bare portion
f2 Coating
G Guide shaft
M Interlocking mechanism
O Axis
P11 Optical fiber cutting position
P12 Connection position
P21 Coating cut position
P22 Coating removal position
P23 Bare portion cutting position
P24 Retracted position
R Link mechanism
X Extending direction
Y Orthogonal direction
Z Vertical direction

## Claims

1. An optical fiber processing tool comprising:
a fiber holder configured to hold an optical fiber in a state where an end portion of the optical fiber extends to one side;
a fiber cutting portion configured to cut the optical fiber;
a connector holder configured to hold an optical connector; and
a guide rail configured to guide movement of the fiber holder,
wherein the fiber cutting portion and the connector holder are disposed at an interval in an orthogonal direction orthogonal to an extending direction of the optical fiber, and
the fiber holder is linearly movable in the orthogonal direction between an optical fiber cutting position where the fiber cutting portion cuts the optical fiber and a connection position where the optical connecter is connected to the optical fiber while being guided by the guide rail.

2. The optical fiber processing tool according to Claim 1, further comprising:
a coating stripper configured to remove a coating of the optical fiber,
wherein when the fiber holder is at the optical fiber cutting position, the coating stripper faces the fiber holder in the extending direction.

3. The optical fiber processing tool according to Claim 2, further comprising:
a guide shaft extending in the extending direction,
wherein the coating stripper is slidable in the extending direction together with the guide shaft,
the fiber holder has a first guide hole and a second guide hole that extend in the extending direction,
the first guide hole and the second guide hole are disposed at an interval in the orthogonal direction,
when the fiber holder is at the optical fiber cutting position, a position of the guide shaft and a position of the first guide hole in the orthogonal direction coincide with each other, and
when the fiber holder is at the connection position, the position of the guide shaft and a position of the second guide hole in the orthogonal direction coincide with each other.

4. The optical fiber processing tool according to Claim 2 or 3,
wherein the coating stripper includes a first stripper blade and a second stripper blade,
the first stripper blade is supported by a first link member,
the second stripper blade is supported by a second link member,
the first link member is swingable about a first link rotation shaft,
the second link member is swingable about a second link rotation shaft, and
the first link rotation shaft and the second link rotation shaft are disposed at positions farther from the fiber holder in the extending direction than the first stripper blade and the second stripper blade.
